# EUROPÄISCHE PATENTANMELDUNG

(11) **EP 3 628 534 A1**
(43) Veröffentlichungstag der Anmeldung: **01.04.2020**
(21) Anmeldenummer: 19193424.9
(22) Anmeldetag: 23.08.2019
(51) Int. Cl.: B60L 53/30, B60L 53/60, B60L 53/62, H02J 7/00

(54) **MEHRFACHLADEANSCHLUSSVORRICHTUNG FÜR ELEKTROFAHRZEUGE**

(30) Priorität: 25.09.2018 DE 102018123601
(71) Anmelder: Innogy SE, 45128 Essen (DE)
(72) Erfinder: SCHNEIDER, Michael, 44388 Dortmund (DE)
(74) Vertreter: Cohausz & Florack

(57) **Zusammenfassung**

Die Anmeldung betrifft eine Mehrfachladeanschlussvorrichtung (100, 200, 300, 400) für Elektrofahrzeuge (464, 466), umfassend einen, zu einem Ladeanschluss (453) einer Ladestation (452) korrespondierenden Eingangsanschluss (106, 206, 306, 406), einen ersten, zu einem Ladeanschluss (456, 458) eines Elektrofahrzeugs (464, 466) korrespondierenden Ausgangsanschluss (110, 210, 310, 410), mindestens einen weiteren, zu einem Ladeanschluss (456, 458) eines Elektrofahrzeugs (464, 466) korrespondierenden Ausgangsanschluss (112, 212, 312, 412), und mindestens eine Freigabeeinrichtung (116, 216, 316), eingerichtet zum Freigeben eines Stromflusses von dem Eingangsanschluss (106, 206, 306, 406) zu mindestens einem der Ausgangsanschlüsse (110, 112, 210, 212, 310, 312, 410, 412) bei Erhalt einer Kopplungsinformation über die Herstellung einer Kopplung eines Ausgangsanschlusses (110, 112, 210, 212, 310, 312, 410, 412) mit einem Ladeanschluss (456, 458) eines Elektrofahrzeugs (464, 466).

## Beschreibung

Die Anmeldung betrifft eine Mehrfachladeanschlussvorrichtung zum Laden von Elektrofahrzeugen unter Nutzung einer Ladestation. Die Anmeldung betrifft darüber hinaus ein Verfahren zum Betreiben einer Mehrfachladeanschlussvorrichtung und ein Ladesystem.

Elektrische Ladestationen zum Laden von Elektrofahrzeugen sind bekannt. Unter einer Ladestation ist vorliegend eine Station zu verstehen, die eine Leistung von zumindest über 5 kW, vorzugsweise zumindest 11 kW, besonders bevorzugt von zumindest 22 kW, über einen Ladeanschluss bereitstellt. Unter einem Elektrofahrzeug ist vorliegend ein Fahrzeug zu verstehen, das zumindest teilweise elektrisch betrieben werden kann und einen wiederaufladbaren elektrischen Speicher umfasst.

Insbesondere in oder an Parkanordnungen (Garagen, Carports, Tiefgaragen, bestimmte Stellplätze etc.) für Fahrzeuge, insbesondere Autos, werden vermehrt elektrische Ladestationen installiert. So installieren Nutzer eines Elektrofahrzeugs an einer Parkanordnung für das Elektrofahrzeig eine einzelne Ladestation zum Laden des Elektrofahrzeugs. Die Ladestation hat gegenüber einem herkömmlichen Haushaltsanschluss, z.B. in Form einer Schukokupplung, den Vorteil, dass eine höhere elektrische Leistung zum Laden des Elektrofahrzeugs bereitgestellt wird. Der Speicher des Elektrofahrzeugs kann somit in kürzerer Zeit als bei geringeren Leistungen geladen (oder entladen) werden.

Studien gehen davon aus, dass zukünftig Nutzer, beispielsweise in Form einer Gruppe (z.B. Familie, Wohngemeinschaft etc.), zwei oder mehr Elektrofahrzeuge besitzen werden. Dies führt dazu, dass eine entsprechende Zahl von Ladestationen (für die Parkanordnung) vorgehalten werden müssen, damit auch jedes Elektrofahrzeug mit einer hohen Leistung geladen werden kann.

In der Regel wird der entsprechende Hausanschluss nicht ausreichen, um zwei Ladestation, beispielsweise in Form von Ladesäulen oder Wallboxen, parallel mit der entsprechenden Energie bzw. Leistung zu beliefern. Ferner ist davon auszugehen, dass der entsprechende Netzbetreiber dieses schon in naher Zukunft reglementieren wird.

Dementsprechend muss bei einer installierten Ladestation bei zwei zu ladenden Elektrofahrzeugen nach einem Hinweis, dass der Ladevorgang des ersten Elektrofahrzeugs abgeschlossen ist, der Nutzer zur Ladesäule oder Wallbox gehen und das erste Elektrofahrzeug von der Ladestation trennen und das zweite Elektrofahrzeug anschließen bzw. ankoppeln. Der hiermit verbundene Aufwand verringert den Nutzerkomfort beim Laden von Elektrofahrzeugen erheblich.

Daher liegt der Anmeldung die Aufgabe zugrunde, eine Vorrichtung bereitzustellen, die den Nutzerkomfort beim Laden von Elektrofahrzeugen durch eine Ladestation erhöht.

Die Aufgabe wird gemäß einem ersten Aspekt der Anmeldung durch eine Mehrfachladeanschlussvorrichtung für Elektrofahrzeuge gemäß Anspruch 1 gelöst. Die Mehrfachladeanschlussvorrichtung umfasst einen, zu einem Ladeanschluss einer Ladestation korrespondierenden Eingangsanschluss. Die Mehrfachladeanschlussvorrichtung umfasst einen ersten, zu einem Ladeanschluss eines Elektrofahrzeugs korrespondierenden Ausgangsanschluss. Die Mehrfachladeanschlussvorrichtung umfasst mindestens einen weiteren, zu einem Ladeanschluss eines Elektrofahrzeugs korrespondierenden Ausgangsanschluss. Die Mehrfachladeanschlussvorrichtung umfasst mindestens eine Freigabeeinrichtung, eingerichtet zum Freigeben eines Stromflusses von dem Eingangsanschluss zu mindestens einem der Ausgangsanschlüsse bei Erhalt einer Kopplungsinformation über die Herstellung einer Kopplung eines Ausgangsanschlusses mit einem Ladeanschluss eines Elektrofahrzeugs.

Im Gegensatz zum Stand der Technik wird anmeldungsgemäß der Nutzerkomfort beim Laden von Elektrofahrzeugen durch eine Ladestation signifikant verbessert, indem zwei oder mehr Elektrofahrzeuge an die Ladestation über die anmeldungsgemäße Mehrfachladeanschlussvorrichtung gleichzeitig angeschlossen werden können. Ein manuelles Trennen einer Kopplung zwischen einer Ladestation und einem ersten Elektrofahrzeug nach Beendigung des Ladevorgangs des ersten Elektrofahrzeugs und Herstellen einer Kopplung zwischen der Ladestation und einem zweiten Elektrofahrzeug durch einen Nutzer entfällt, da beide Elektrofahrzeuge über die Mehrfachladeanschlussvorrichtung mit der Ladestation gleichzeitig verbunden werden können.

Die anmeldungsgemäße Mehrfachladeanschlussvorrichtung ist insbesondere in Form einer (intelligenten) Mehrfachsteckdose gebildet. Um die Mehrfachladeanschlussvorrichtung elektrisch und insbesondere mechanisch mit einer Ladestation zu koppeln, weist die Mehrfachladeanschlussvorrichtung einen Eingangsanschluss auf, der insbesondere elektrisch und mechanisch zu dem Ladeanschluss der Ladestation korrespondiert. Anders ausgedrückt ist der Eingangsanschluss mit einem Ladeanschluss der Ladestation mechanisch und/oder elektrisch koppelbar. Beispielsweise kann der Eingangsanschluss ein Stecker bzw. Steckergesicht sein, der/das mit einen entsprechenden Ladeanschluss der Ladestation gekoppelt werden kann. Hierbei kann die Mehrfachladeanschlussvorrichtung in der Regel über genau einen Eingangsanschluss verfügen.

Gemäß einer bevorzugten Ausführungsform kann der Eingangsanschluss ein Ladestecker Typ 2, nach der Norm IEC 62196-2, oder eine Ladesteckdose Typ 2, nach der Norm IEC 62196-2, sein.

Ein Eingangsanschluss (Buchse oder Stecker) kann insbesondere nach Typ 1, 2 oder 3 sowie CCS nach IEC 62196 oder auch eine Chademo gebildet sein. Andere Typen von Anschlüssen lassen sich ebenfalls anordnen.

Wie bereits beschrieben wurde, ist unter einer Ladestation vorliegend eine Station zu verstehen, beispielsweise in Form einer Ladesäule oder Wallbox, die eine Leistung von zumindest über 5 kW, vorzugsweise zumindest 11 kW, besonders bevorzugt von zumindest 22 kW, über den Ladeanschluss der Ladestation bereitstellt.

Neben dem Eingangsanschluss weist die Mehrfachladeanschlussvorrichtung mindestens zwei Ausgangsanschlüsse auf, die insbesondere jeweils mit dem Eingangsanschluss, beispielsweise über einen internen elektrischen Stromkreis, der in einem Gehäuse der Mehrfachladeanschlussvorrichtung angeordnet ist, elektrisch verbindbar sind.

Die mindestens zwei Ausgangsanschlüsse der Mehrfachladeanschlussvorrichtung korrespondieren jeweils zu einem Ladeanschluss eines Elektrofahrzeugs. Anders ausgedrückt ist ein erster Ausgangsanschluss mit einem Ladeanschluss eines Elektrofahrzeugs mechanisch und/oder elektrisch koppelbar. Der mindestens eine weitere Ausgangsanschluss ist ebenfalls mit einem Ladeanschluss eines Elektrofahrzeugs mechanisch und/oder elektrisch koppelbar. Beispielsweise kann ein Ausgangsanschluss eine Steckerbuchse bzw. Steckdose sein, die mit einen entsprechenden Ladeanschluss, beispielsweise in Form eines an einem Ladekabel befestigten Ladesteckers oder Ladebuchse, des Elektrofahrzeugs gekoppelt werden kann.

Gemäß einer bevorzugten Ausführungsform kann der erste und insbesondere der weitere Ausgangsanschluss jeweils ein Ladestecker Typ 2, nach der Norm IEC 62196-2, oder eine Ladesteckdose Typ 2, nach der Norm IEC 62196-2, sein. Ein Ausgangsanschluss (Buchse oder Stecker) kann insbesondere nach Typ 1, 2 oder 3 sowie CCS nach IEC 62196 oder auch eine Chademo gebildet sein. Andere Typen von Anschlüssen lassen sich ebenfalls anordnen.

Insbesondere aus Sicherheitsgründen, aufgrund der durch die Ladestation verfügbaren hohen elektrischen Leistung, weist die Mehrfachladeanschlussvorrichtung eine Freigabeeinrichtung auf, um einen Stromfluss (nur) bei einer hergestellten (elektrischen und mechanischen) Kopplung eines Ausgangsanschlusses mit einem Ladeanschluss eines Elektrofahrzeugs zu ermöglichen. Die Freigabeeinrichtung ist insbesondere zum Erhalten einer Kopplungsinformation eingerichtet.

Vorliegend repräsentiert die Kopplungsinformation den Kopplungszustand eines Ausgangsanschlusses, also insbesondere, ob ein Ladeanschluss mit dem Ausgangsanschluss (augenblicklich) (elektrisch und mechanisch, z.B. verriegelt) gekoppelt ist (oder nicht). Nur bei Erhalt einer Kopplungsinformation, dass eine (elektrische und mechanische) Kopplung zwischen Ausgangsanschluss und Ladeanschluss vorliegt, also hergestellt ist, wird ein Stromfluss von dem Eingangsanschluss zu mindestens einem der Ausgangsanschlüsse, beispielsweise durch Herstellung einer elektrischen Verbindung, durch die Freigabeeinrichtung freigegeben.

Bei Erhalt, durch die Freigabeeinrichtung, einer Entkopplungsinformation, dass eine (elektrische und mechanische) Entkopplung zwischen Ausgangsanschluss und Ladeanschluss vorliegt, also hergestellt ist, kann der Stromfluss gesperrt werden, beispielsweise durch Unterbrechung der elektrischen Verbindung zwischen Ausgangsanschluss und Eingangsanschluss.

Gemäß einer Ausführungsform der anmeldungsgemäßen Mehrfachladeanschlussvorrichtung kann die Freigabeeinrichtung (zum Freigeben und Sperren eines Stromflusses) mindestens ein Schaltmodul umfassen, eingerichtet zum Herstellen einer elektrischen Verbindung zwischen dem Eingangsanschluss und dem mindestens einen Ausgangsanschluss, insbesondere bei Erhalt der Kopplungsinformation über die Herstellung einer Kopplung des mindestens einen Ausgangsanschlusses mit einem Ladeanschluss eines Elektrofahrzeugs. Vorzugsweise kann zwischen dem Eingangsanschluss und jedem Ausgangsanschluss mindestens ein Schaltmodul angeordnet sein, das insbesondere individuell angesteuert werden kann, um das Schaltmodul zu öffnen oder zu schließen. Dies erlaubt es insbesondere, einen Stromfluss nur zu dem Ausgangsanschluss freizugeben, für den eine entsprechende Kopplungsinformation erhalten wurde. Die Sicherheit kann noch weiter verbessert werden.

Es versteht sich, dass bei Erhalt einer Entkopplungsinformation das Schaltermodul angesteuert werden kann, um die elektrische Verbindung zu trennen und insbesondere den Stromfluss zum entsprechenden Ausgangsanschluss zu unterbrechen.

Gemäß einer bevorzugten Ausführungsform der anmeldungsgemäßen Mehrfachladeanschlussvorrichtung kann zum Erhalten einer Kopplungsinformation die Freigabeeinrichtung mindestens ein Detektionsmodul umfassen, eingerichtet zum Detektieren eines mit einem Ladeanschluss eines Elektrofahrzeugs gekoppelten Ausgangsanschlusses. Insbesondere kann das Detektionsmodul unmittelbar nach vollständiger Herstellung einer elektrischen und mechanischen Kopplung eines Ausgangsanschlusses mit einem Ladeanschluss eine Kopplungsinformation für diesen Ausgangsanschluss bereitstellen, so dass insbesondere das diesem Ausganganschluss zugeordnete Schaltmodul angesteuert werden kann, um einen Stromfluss zu diesem Ausgangsanschluss zu ermöglichen. Eine vollständige mechanische Kopplung kann beispielsweise ein Verriegeln des Ladeanschlusses mit dem Ausgangsanschluss umfassen. In entsprechender Weise kann das Detektionsmodul unmittelbar nach einer teilweisen Entkopplung (mechanisch oder elektrisch) eine Entkopplungsinformation bereitstellen, so dass insbesondere das diesem Ausganganschluss zugeordnete Schaltmodul angesteuert werden kann, um einen Stromfluss zu unterbrechen.

Grundsätzlich kann der Erhalt der Kopplungsinformation beliebig gestaltet sein, so lange gewährleistet ist, dass bei einer hergestellten Kopplung zwischen einem Ladeanschluss und einem Ausgangsanschluss diese Kopplungsinformation der Freigabeeinrichtung bereitgestellt wird. Beispielsweise kann ein mechanisches Verriegelungsmodul eines Ausgangsanschlusses, beispielsweise mittels Sensormittel, überwacht werden. Bei Detektion eines Verriegelungszustands kann diese Information als Kopplungsinformation der Freigabeeinrichtung bereitgestellt werden. In entsprechender Weise kann ein Entkopplungszustand erfasst und bereitgestellt werden.

Bei einer bevorzugten Ausführungsform der Mehrfachladeanschlussvorrichtung kann das Detektionsmodul eingerichtet sein zum Detektieren eines ersten Ladebereitsignals, das durch ein gekoppeltes Elektrofahrzeug über den Ladeanschluss des Elektrofahrzeugs und den Ausgangsanschluss ausgesendet wird. Durch die Detektion eines ersten Ladebereitsignals kann eine Kopplungsinformation erhalten werden. Beispielsweise kann für die Übertragung des ersten Ladebereitsignals ein Pilotleiter oder dergleichen vorgesehen sein. Das Ladebereitsignal kann ein bestimmter Spannungspegel und/oder ein PWM (Pulsweitenmodulation) Signal sein. Ein Ladebereitsignal kann von einem Elektrofahrzeug zumindest dann ausgesendet werden, wenn das Elektrofahrzeug ladebereit ist.

Zusätzlich kann ein erstes Ladebereitsignal oder mindestens ein weiteres Ladesignal (gewünschte) Ladeparameter (z.B. (max.) Ladestrom, Ladezustand des elektrischen Speichers etc.) umfassen. In besonders einfacher Weise kann ein Kopplungszustand detektiert werden.

Darüber hinaus kann, gemäß einer weiteren Ausführungsform, die Freigabeeinrichtung mindestens ein Verarbeitungsmodul umfassen, eingerichtet zum Bewirken eines Aussendens eines zweiten Ladebereitsignals über den Eingangsanschluss an die angeschlossene Ladestation, basierend auf dem Erhalt einer Kopplungsinformation, vorzugsweise basierend auf dem erhaltenen ersten Ladebereitsignal. Das Verarbeitungsmodul ist vorzugsweise eingerichtet, den Pilotstromkreis der Ladestation derart zu ändern (insbesondere zu unterbrechen), dass die Ladeanschlussverriegelung an der Ladestation aufgehoben wird. Anders ausgedrückt kann durch Aussenden eines zweiten Ladebereitsignals beispielsweise der Pilotstromkreis der Ladestation geändert werden. Strom kann über die Mehrfachladeanschlussvorrichtung, insbesondere von der Ladestation an den Eingangsanschluss und den freigeschalteten Ausgangsanschluss, zu dem Elektrofahrzeug fließen.

Insbesondere können Ladeparameter durch das Verarbeitungsmodul an die Ladestation weitergeleitet werden oder derart verarbeitet werden (z.B. unter Berücksichtigung eines augenblicklich durchgeführten weiteren Ladevorgangs), dass angepasste Ladeparameter (z.B. an den augenblicklich durchgeführten Ladevorgang) an die Ladestation und/oder das Elektrofahrzeug übertragen werden. Vorzugsweise kann das Verarbeitungsmodul eine Vermittlungsfunktion zwischen Elektrofahrzeug und Ladestation einnehmen. Hierbei kann das Verarbeitungsmodul evtl. weitere Ladevorgänge der Mehrfachladeanschlussvorrichtung berücksichtigen, um die Ladeparameter zwischen Ladestation und Elektrofahrzeug auszuhandeln bzw. dies zu unterstützen.

Gemäß einer besonders bevorzugten Ausführungsform der anmeldungsgemäßen Mehrfachladeanschlussvorrichtung kann die Mehrfachladeanschlussvorrichtung mindestens eine Verteilungsschaltung umfassen, eingerichtet zum Verteilen der über den Eingangsanschluss verfügbaren Leistung auf die mindestens zwei jeweils mit einem Ladeanschluss eines Elektrofahrzeugs gekoppelten Ausgangsanschlüsse, basierend auf mindestens einer bestimmten Verteilregel. Insbesondere können elektrische und ansteuerbare Elemente in der Verteilungsschaltung vorgesehen sein (beispielsweise Schaltelemente, Teiler etc.), um eine an dem Eingangsanschluss verfügbare Leistung bzw. den verfügbaren Strom entsprechend einer bestimmten (vorgebbaren) Verteilregel auf die zumindest zwei Ausgangsanschlüsse, für die eine Kopplungsinformation vorliegt, zu verteilen. Die zuvor beschriebenen Schaltmodule können zumindest ein Teil der elektrischen Verteilungsschaltung sein.

Grundsätzlich kann mindestens eine bestimmte Verteilregel, beispielsweise in einem auslesbaren Speicher der Mehrfachladeanschlussvorrichtung, gespeichert sein. Ein Steuerelement kann die Verteilungsschaltung zumindest abhängig von den vorliegenden Kopplungsinformationen und der mindestens einen gespeicherten Verteilregel steuern, so dass der Strom entsprechend der Verteilregel an die Ausgangsanschlüsse durch die entsprechend der Verteilregel geschaltete Verteilungsschaltung geleitet wird. Auch kann die Verteilungsschaltung eine feste Verdrahtung entsprechend einer bestimmten Verteilregel umfassen.

Die mindestens eine bestimmte Verteilregel kann, gemäß einer Ausführungsform, ausgewählt sein aus der Gruppe, umfassend:
- (an dem Eingangsanschluss) verfügbare Leistung wird vollständig bis zur Detektion einer Beendigung des Ladevorgangs an den Ausgangsanschluss verteilt, der als erster mit einem Ladeanschluss eines Elektrofahrzeugs gekoppelt wurde,
- (an dem Eingangsanschluss) verfügbare Leistung wird gleichmäßig auf die mindestens zwei Ausgangsanschlüsse verteilt,
- (an dem Eingangsanschluss) verfügbare Leistung wird abhängig von einer vorgegebenen Priorität der Ausgangsanschlüsse auf die mindestens zwei Ausgangsanschlüsse verteilt,
- (an dem Eingangsanschluss) verfügbare Leistung wird abhängig von einer erhaltenen Priorität der zu ladenden Elektrofahrzeuge auf die mindestens zwei Ausgangsanschlüsse verteilt, und
- (an dem Eingangsanschluss) verfügbare Leistung wird abhängig von einer vorgegebenen Stufenfunktion gestuft an die mindestens zwei Ausgangsanschlüsse verteilt.

Gemäß einer ersten Verteilregel kann die verfügbare Leistung vollständig, bis zur Detektion einer Beendigung von diesem Ladevorgang, an den Ausgangsanschluss verteilt werden, der als erster mit einem Ladeanschluss eines Elektrofahrzeugs gekoppelt wurde. Anders ausgedrückt ist in dieser Verteilregel das Prinzip "first come - first serve" implementiert. Das Elektrofahrzeug, welches (zeitlich gesehen) zuerst verbunden wurde, wird vollgeladen. Anschließend wird das Elektrofahrzeug, welches (zeitlich gesehen) als nächstes an die Mehrfachladeanschlussvorrichtung angeschlossen wurde, vollständig geladen, usw.

In einer alternativen Verteilregel kann das Prinzip "equal charging" implementiert sein. Die an dem Eingangsanschluss verfügbare Leistung kann gleichmäßig auf die mindestens zwei Ausgangsanschlüsse verteilt werden, für die eine Kopplungsinformation vorliegt. Alle angeschlossen Elektrofahrzeuge erhalten bei dieser Verteilregel die gleiche Leistung, so dass z.B. bei einer 11 kW Wallbox oder Ladesäule an einer Mehrfachladeanschlussvorrichtung mit drei (gekoppelten) Ausgangsanschlüssen, also bei drei erhaltenen Kopplungsinformationen, jeder ca. 3,6 kW Leistung erhält.

In anderen Verteilregeln können Priorisierungen vorgesehen sein. Beispielsweise kann die verfügbare Leistung abhängig von der jeweiligen Priorität der mindestens zwei Ausgangsanschlüsse und/oder der zu ladenden Elektrofahrzeuge auf die mindestens zwei Ausgangsanschlüsse verteilt werden.

Schließlich kann in einer alternativen Verteilregel das Prinzip "stair charging" implementiert sein. Die verfügbare Leistung an dem Eingangsanschluss kann bei dieser Verteilregel abhängig von einer vorgegebenen Stufenfunktion gestuft an die mindestens zwei Ausgangsanschlüsse verteilt werden, für die eine Kopplungsinformation vorliegt. Jedes Elektrofahrzeug, welches an die Mehrfachladeanschlussvorrichtung angeschlossen wird, kann Leistung erhalten, wobei gestuft, das erste Elektrofahrzeug die meiste Leistung erhalten kann und sukzessive nach Beladung jedes weitere "step by step", ähnlich einer Treppenfunktion bzw. Stufenfunktion, weniger Leistung erhalten kann.

Gemäß einer weiteren Ausführungsform kann die Mehrfachladeanschlussvorrichtung mindestens eine Schnittstelle umfassen, eingerichtet zum Vorgeben der mindestens einen bestimmten Verteilregel. Beispielsweise kann das Vorgeben ein Auswählen einer Verteilregel aus einer Mehrzahl zuvor beschriebener Verteilregeln mittels der Schnittstelle umfassen. Die Verteilregeln können beispielsweise in einem Speicher der Mehrfachladeanschlussvorrichtung (vorab) gespeichert sein. Auch kann das Vorgeben ein Übertragen einer bestimmten Verteilregel an die Mehrfachladeanschlussvorrichtung mittels der Schnittstelle umfassen.

Die Schnittstelle kann insbesondere eine manuell bedienbare Nutzerschnittstelle sein, beispielsweise ein Schalter, ein Touchdisplay oder eine ähnliche Nutzerschnittstelle, mit der beispielsweise eine bestimmte Verteilregel auswählbar ist. Alternativ oder zusätzlich kann die Schnittstelle eine Kommunikationsschnittstelle sein, eingerichtet zum Kommunizieren mit einem entfernt von der Mehrfachladeanschlussvorrichtung angeordneten Steuergerät, insbesondere einem Hausautomatisierungssteuergerät eines Hausautomatisierungssystems. Beispielsweise kann über das Steuergerät (drahtlos und/oder drahtgebunden) die mindestens eine Verteilregel ausgewählt und/oder übertragen werden. Ein flexibler Ladebetrieb der Mehrfachladeanschlussvorrichtung, je nach Nutzeranforderung, kann bereitgestellt werden.

Gemäß einer weiteren Ausführungsform kann die Mehrfachladeanschlussvorrichtung mindestens einen noch weiteren, zu einem Haushaltsanschluss korrespondierenden Ausgangsanschluss umfassen. Hierunter ist vorliegend zu verstehen, dass der noch weitere (Haus-)Ausgangsanschluss derart eingerichtet sein kann, dass er mit einem (herkömmlichen) Haushaltsanschluss (beispielsweise in Form eines Steckers) mechanisch und/oder elektrisch koppelbar ist.

Insbesondere kann der noch weitere Ausgangsanschluss eine Schukokupplung oder ein Schukostecker sein. Dies kann es ermöglichen, ein anderes Gerät, beispielswiese ein Elektrofahrrad, (ebenfalls) über die Ladestation mittels der Mehrfachladeanschlussvorrichtung zu laden. Auch hier kann vorgesehen sein, dass die Freigabeeinrichtung den Stromfluss zu dem (Haus-)Ausgangsanschluss nur bei Vorliegen einer Kopplungsinformation (beispielsweise bei Detektion einer Verriegelung des Haushaltsanschluss mit dem (Haus-)Ausgangsanschluss) freigibt. Das Verarbeitungsmodul kann in oben beschriebener Weise eine Ladeanschlussverriegelung an der Ladestation aufheben.

Ein weiterer Aspekt der Anmeldung ist ein Verfahren zum Betreiben einer Mehrfachladeanschlussvorrichtung, insbesondere einer zuvor beschriebenen Mehrfachladeanschlussvorrichtung, wobei die Mehrfachladeanschlussvorrichtung einen, zu einem Ladeanschluss einer Ladestation korrespondierenden Eingangsanschluss, einen ersten, zu einem Ladeanschluss eines Elektrofahrzeugs korrespondierenden Ausgangsanschluss, und mindestens einen weiteren, zu einem Ladeanschluss eines Elektrofahrzeugs korrespondierenden Ausgangsanschluss aufweist. Das Verfahren umfasst:
- Detektieren einer Kopplung eines Ladeanschlusses eines Elektrofahrzeugs mit einem der Ausgangsanschlüsse, und
- Freigeben eines Stromflusses zwischen dem Eingangsanschluss und einem Ausgangsanschluss, basierend auf der detektierten Kopplung.

Durch das Detektieren einer hergestellten Kopplung kann insbesondere eine Kopplungsinformation erhalten werden. Das Freigeben eines Stromflusses kann insbesondere das Herstellen einer elektrischen Verbindung zwischen Eingangsanschluss und dem Ausgangsanschluss, für den eine Kopplungsinformation vorliegt, also eine hergestellte Kopplung detektiert wird, umfassen. Vorzugsweise kann ein zuvor beschriebenes Schaltmodul geschlossen werden, um einen Stromfluss zu ermöglichen.

Das Verfahren kann gemäß einer weiteren Ausführungsform ferner das Detektieren einer Entkopplung eines Ladeanschlusses eines Elektrofahrzeugs mit einem der Ausgangsanschlüsse und insbesondere das Sperren des Stromflusses zwischen dem Eingangsanschlusses und dem (entkoppelten) Ausgangsanschluss, basierend auf der detektierten Entkopplung bzw. Entkopplungsinformation, umfassen.

Ein noch weiterer Aspekt der Anmeldung ist ein Ladesystem. Das Ladesystem umfasst mindestens eine Ladestation mit mindestens einem Ladeanschluss. Das Ladesystem umfasst mindestens eine mit dem Ladeanschluss verbindbare, zuvor beschriebene Mehrfachladeanschlussvorrichtung.

Darüber hinaus kann das Ladesystem zumindest ein Steuergerät umfassen, eingerichtet zum Steuern der Mehrfachladeanschlussvorrichtung. Das Steuergerät kann eingerichtet sein, den mindestens einen Ladevorgang, der unter Verwendung der Mehrfachladeanschlussvorrichtung durchgeführt wird, zu beeinflussen (z.B. Starten, Unterbrechen, Beenden, eine Verteilregel vorgeben, wie oben beschrieben wurde). Hierzu kann eine Kommunikationsverbindung zwischen Mehrfachladeanschlussvorrichtung und Steuergerät aufgebaut werden, um die Mehrfachladeanschlussvorrichtung anzusteuern.

Das Steuergerät kann vorzugsweise ein (ohnehin) vorgesehenes Hausautomatisierungssteuergerät eines Hausautomatisierungssystems sein. Das Hausautomatisierungssteuergerät kann beispielsweise ferner zur Steuerung einer Beleuchtung, einer Heizung etc. vorgesehen sein.

Es sei angemerkt, dass anmeldungsgemäße Einrichtungen, Module etc. aus Hardwarekomponenten (z.B. Prozessoren, Schnittstellen, Speichermitteln etc.) und/oder Softwarekomponenten (z.B. durch einen Prozessor ausführbarer Code) gebildet sein können.

Die Merkmale der Mehrfachladeanschlussvorrichtungen, Ladesysteme und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Mehrfachladeanschlussvorrichtung, das anmeldungsgemäße Ladesystem und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Mehrfachladeanschlussvorrichtung gemäß der vorliegenden Anmeldung,
- Fig. 2: eine schematische Ansicht eines weiteren Ausführungsbeispiels einer Mehrfachladeanschlussvorrichtung gemäß der vorliegenden Anmeldung,
- Fig. 3: eine schematische Ansicht eines weiteren Ausführungsbeispiels einer Mehrfachladeanschlussvorrichtung gemäß der vorliegenden Anmeldung,
- Fig. 4: eine schematische Ansicht eines Ausführungsbeispiels eines Ladesystems gemäß der vorliegenden Anmeldung, und
- Fig. 5: ein Diagramm eines Ausführungsbeispiels eines Verfahrens gemäß der vorliegenden Anmeldung.

In den Figuren werden für gleiche Elemente gleiche Bezugszeichen verwendet.

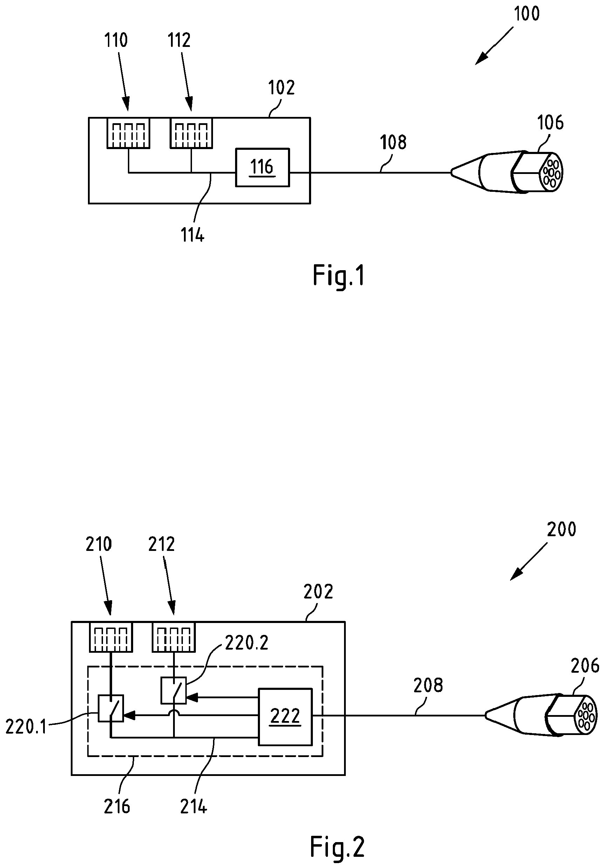

Die Figur 1 zeigt eine schematische Ansicht eines Ausführungsbeispiels einer Mehrfachladeanschlussvorrichtung 100 gemäß der vorliegenden Anmeldung. Die Mehrfachladeanschlussvorrichtung 100 weist einen Eingangsanschluss 106 auf, der insbesondere elektrisch und mechanisch zu einem (nicht gezeigten) Ladeanschluss einer Ladestation korrespondiert. Vorzugsweise ist der Eingangsanschluss 106 ein Ladestecker Typ 2 nach der Norm IEC 62196-2. Bei anderen Varianten der Anmeldung kann es sich bei dem Eingangsanschluss 106 auch um eine Ladebuchse, insbesondere nach der Norm IEC 62196-2, handeln.

Der Eingangsanschluss 106 ist über ein elektrisches Kabel 108 mit einem internen Stromkreis 114 der Mehrfachladeanschlussvorrichtung 100 verbunden. Insbesondere verfügt die Mehrfachladeanschlussvorrichtung 100 über ein Gehäuse 102, in dem der interne Stromkreis 114 integriert ist.

Ferner kann der Figur 1 entnommen werden, dass die Mehrfachladeanschlussvorrichtung 100 einen ersten, zu einem (nicht gezeigten) Ladeanschluss eines Elektrofahrzeugs korrespondierenden Ausgangsanschluss 110 und mindestens einen weiteren, zu einem Ladeanschluss eines Elektrofahrzeugs korrespondierenden Ausgangsanschluss 112 aufweist. Es versteht sich, dass drei oder mehr derartige Ausgangsanschlüsse vorgesehen sein können.

Über den internen Stromkreis 114 und eine in dem Gehäuse 102 angeordnete Freigabeeinrichtung 116 kann ein Ausgangsanschluss 110, 112 mit dem Eingangsanschluss 106 elektrisch verbindbar sein. Die beiden dargestellten Ausgangsanschlüsse 110, 112 können insbesondere Ausgangsbuchsen nach der Norm IEC 62196-2 sein. Bei anderen Varianten der Anmeldung kann es sich bei zumindest einem Ausgangsanschluss auch um einen Stecker, insbesondere nach der Norm IEC 62196-2, handeln.

Insbesondere ist die dargestellte Mehrfachladeanschlussvorrichtung 100 eine intelligente Mehrfachsteckdose für eine Ladestation zum Laden von mindestens zwei Elektrofahrzeugen mit einer Gesamtleistung von zumindest 5 kW, vorzugsweise zumindest 11 kW.

Die Freigabeeinrichtung 116 ist eingerichtet zum Freigeben eines Stromflusses von dem Eingangsanschluss 106 zu mindestens einem der Ausgangsanschlüsse 110, 112 bei Erhalt einer Kopplungsinformation über die Herstellung einer Kopplung eines Ausgangsanschlusses 110, 112 mit einem Ladeanschluss eines Elektrofahrzeugs. Durch die Freigabe kann ein Stromfluss von der Ladestation über die Mehrfachladeanschlussvorrichtung 100 zu einem angeschlossenen Elektrofahrzeug und/oder ein Stromfluss von dem angeschlossenen Elektrofahrzeug über die Mehrfachladeanschlussvorrichtung 100 zu der Ladestation ermöglicht werden. Elektrische Leistung kann ausgetauscht werden.

Die Figur 2 zeigt eine schematische Ansicht eines weiteren Ausführungsbeispiels einer Mehrfachladeanschlussvorrichtung 200 gemäß der vorliegenden Anmeldung. Zur Vermeidung von Wiederholungen werden nachfolgend im Wesentlichen nur die Unterschiede zu dem Ausführungsbeispiel nach Figur 1 beschrieben. Für die anderen Komponenten der Mehrfachladeanschlussvorrichtung 200 wird insbesondere auf die obigen Ausführungen verwiesen.

Die Freigabeeinrichtung 216 umfasst im vorliegenden Ausführungsbeispiel ein erstes Schaltmodul 220.1, welches dem ersten Ausgangsanschluss 210 zugeordnet ist, und mindestens ein weiteres Schaltmodul 220.2, welches dem weiteren Ausgangsanschluss 212 zugeordnet ist. Unter einer Zuordnung ist zu verstehen, dass ein Schaltmodul 220.1, 220.2 den Stromfluss durch Schließen eines Schalters (nur) zu dem zugeordneten Ausgangsanschluss 210, 212 ermöglichen und durch Öffnen des Schalters trennen kann.

Ferner umfasst die Freigabeeinrichtung 216 zum Erhalten einer Kopplungsinformation mindestens ein Detektionsmodul 222, eingerichtet zum Detektieren eines mit einem (nicht gezeigten) Ladeanschluss eines Elektrofahrzeugs gekoppelten Ausgangsanschlusses 210, 212.

Das Detektionsmodul 222 ist insbesondere eingerichtet, eine erfolgte (vollständige) Kopplung zwischen einem Ausgangsanschluss 210, 212 und einem Ladeanschluss, beispielsweise ein Ladestecker eines Ladekabels des Elektrofahrzeugs, zu detektieren. Eine vollständige Kopplung liegt insbesondere bei einer elektrischen und mechanischen Kopplung vor, insbesondere bei einer erfolgten mechanischen Verriegelung des Ladeanschlusses mit dem Ausgangsanschluss 210, 212. Die mechanische Verriegelung kann beispielsweise durch (nicht gezeigte) Verriegelungselemente erfolgen. Beispielsweise kann das Detektionsmodul 222 Sensormittel umfassen, um die Verriegelungselemente, insbesondere den Zustand der Verriegelungselemente (z.B. geschlossen, offen etc.), zu überwachen. Eine Kopplung (und in entsprechender Weise eine Entkopplung) kann (unmittelbar) detektiert werden.

Alternativ oder zusätzlich kann ein Ladebereitsignal, welches beispielsweise auf einem (nicht gezeigten) Pilotleiter des internen Stromkreises 214 und des Ladeanschlusses des Elektrofahrzeugs übertragen werden kann, durch geeignete Sensormittel des Detektionsmoduls 222 detektiert werden. Das Ladebereitsignal, beispielsweise mindestens ein bestimmter Spannungspegel oder ein PWM-Signal, kann insbesondere von dem Elektrofahrzeug (nach einer Kopplung mit dem Ausgangsanschluss 210, 212) ausgesendet werden.

Das Detektionsmodul 222 ist insbesondere eingerichtet, den mit einem Ladeanschluss gekoppelten Ausgangsanschluss 210, 212 aus der Mehrzahl von Ausgangsanschlüssen 210, 212 zu identifizieren. Anders ausgedrückt umfasst die Kopplungsinformation eine Information darüber, welcher der Mehrzahl von Ausgangsanschlüssen 210, 212 mit einem Ladeanschluss gekoppelt ist. Insbesondere basierend auf dieser Kopplungsinformation für einen bestimmten Ausgangsanschluss 210, 212 kann nur ein Stromfluss von dem Eingangsanschluss 206 zu dem bestimmten Ausgangsanschluss 210, 212 freigegeben werden. Insbesondere wird nur das Schaltmodul 220.1, 220.2 angesteuert, das dem identifizierten Ausgangsanschluss 210, 212 zugeordnet ist. Nur dieses Schaltmodul 220.1, 220.2 schließt anschließend beispielsweise einen Schalter, um einen Stromfluss zu ermöglichen.

Detektiert das Detektionsmodul 222 eine Entkopplung von dem bestimmten Ausgangsanschluss 210, 212, so kann in entsprechender Weise das Schaltmodul 220.1, 220.2 angesteuert werden, welches dem bestimmten Ausgangsanschluss 210, 212 zugeordnet ist, um ein Unterbrechen des Stromflusses, beispielsweise durch Öffnen eines Schalters eines Schaltmoduls 220.1, 220.2, zu bewirken.

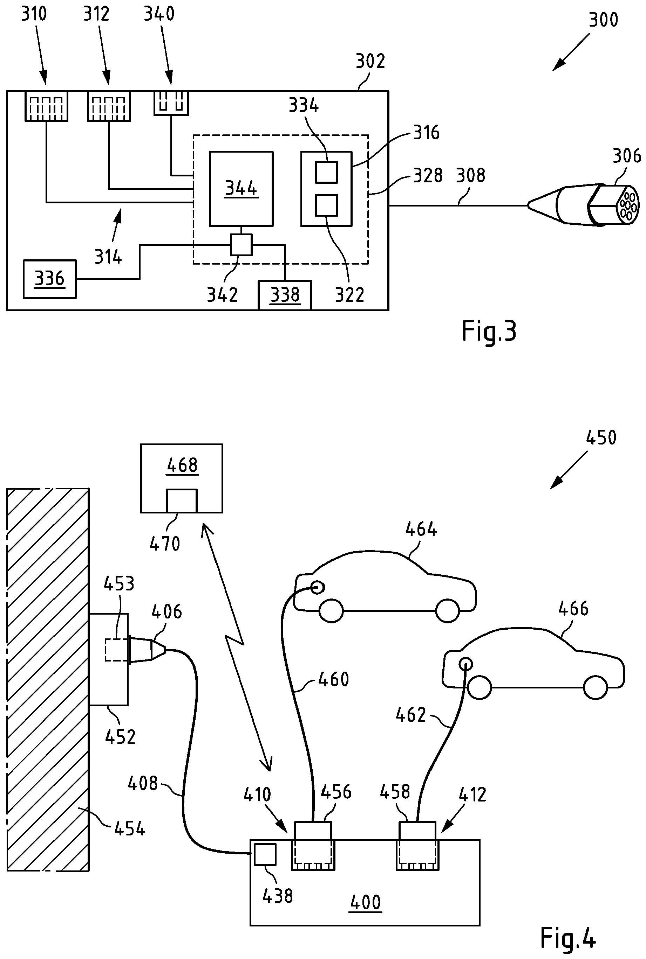

Die Figur 3 zeigt eine schematische Ansicht eines weiteren Ausführungsbeispiels einer Mehrfachladeanschlussvorrichtung 300 gemäß der vorliegenden Anmeldung. Zur Vermeidung von Wiederholungen werden nachfolgend im Wesentlichen nur die Unterschiede zu den Ausführungsbeispielen nach den Figuren 1 und 2 beschrieben. Für die anderen Komponenten der Mehrfachladeanschlussvorrichtung 300 wird insbesondere auf die obigen Ausführungen verwiesen.

Die Mehrfachladeanschlussvorrichtung 300 weist in ihrem Gehäuse 302 eine Steueranordnung 328 auf, die vorliegend eine Verteilungsschaltung 344 und eine Freigabeeinrichtung 316 umfasst. Die Verteilungsschaltung 344 und/oder die Freigabeeinrichtung 316 kann/können insbesondere zuvor beschriebene (zu Gunsten einer besseren Übersicht nicht dargestellte) Schaltmodule (vgl. Fig. 2) umfassen. Neben dem Detektionsmodul 322 umfasst die Freigabeeinrichtung 316 ein Verarbeitungsmodul 334.

Das Verarbeitungsmodul 334 kann eingerichtet sein zum Bewirken eines Aussendens eines zweiten Ladebereitsignals über den Eingangsanschluss 306 an die angeschlossene (nicht gezeigte) Ladestation, basierend auf dem erhaltenen ersten Ladebereitsignal. Das Aussenden eines zweiten Ladebereitsignals durch das Verarbeitungsmodul 334 kann insbesondere ein Ändern (insbesondere Unterbrechen) eines (nicht gezeigten) Pilotstromkreises einer Ladestation umfassen, derart, dass die Ladeanschlussverriegelung an der Ladestation aufgehoben wird.

Hierdurch kann ein Stromfluss von der Ladestation zu der Mehrfachladeanschlussvorrichtung 300 freigeben werden.

Es versteht sich, dass das Verarbeitungsmodul 334 zudem eingerichtet sein kann, den Pilotstromkreis der Ladestation derart zu ändern (insbesondere die Unterbrechung aufzuheben), dass die Ladeanschlussverriegelung an der Ladestation hergestellt wird.

Darüber hinaus kann das Verarbeitungsmodul 334 eine Vermittlungsfunktion zwischen Elektrofahrzeug und Ladestation einnehmen, bei dem evtl. weitere Ladevorgänge berücksichtigt werden können, um die Ladeparameter zwischen Ladestation und Elektrofahrzeug auszuhandeln. Hierzu können die Ladestation und das Elektrofahrzeug entsprechende Signale aussenden, die von dem Verarbeitungsmodul 334 empfangen und, in einem Fall, (unverändert) weitergeleitet werden können. Insbesondere für den Fall eines bereits existierenden Ladevorgangs kann das Verarbeitungsmodul 334 die Ladeparameter, bei Bedarf, ändern, insbesondere an den bereits existierenden Ladevorgang der Mehrfachladeanschlussvorrichtung 300 und/oder einer bestimmten Verteilregel anpassen, und die angepassten Ladeparameter an das Elektrofahrzeug und/oder die Ladestation übertragen.

Die Verteilungsschaltung 344 kann (nicht gezeigte) elektrische Elemente aufweisen, um die Leistung entsprechend einer bestimmten Verteilregel an die mindestens zwei Ausgangsanschlüsse 310, 312 zu verteilen, insbesondere wenn die zumindest zwei Ausgangsanschlüsse 310, 312 jeweils mit einem Ladeanschluss eines Elektrofahrzeugs gekoppelt sind. Die mindestens eine Verteilregel kann beispielsweise in einem Speicher 342 hinterlegt sein, der von einem (nicht gezeigten) Steuerelement der Verteilungsschaltung 344 ausgelesen werden kann.

Dann kann die am Eingangsanschluss 306 verfügbare Leistung entsprechend der bestimmten Verteilregel (z.B. "first come - first serve", "equal charging", "stair charging" etc.) auf die mindestens zwei gekoppelten Ausgangsanschlüsse 310, 312 verteilt werden. Hierzu können die elektrischen Elemente der Verteilschaltung beispielsweise entsprechend verschaltet werden. Es versteht sich, dass auch eine feste Verdrahtung entsprechend einer bestimmten Verteilregel vorgesehen sein kann.

Optional kann eine erste Schnittstelle 336 in Form einer manuell bedienbaren Nutzerschnittstelle 336 (beispielsweise ein Schalter, ein Touchdisplay oder eine ähnliche Nutzerschnittstelle) vorgesehen sein. Die Nutzerschnittstelle 336 kann beispielsweise eine Auswahl einer bestimmten Verteilregel aus mindestens zwei verfügbaren Verteilregeln durch den Nutzer ermöglichen.

Alternativ oder zusätzlich kann optional eine Kommunikationsschnittstelle 338 vorgesehen sein. Die Kommunikationsschnittstelle 338 kann beispielsweise eine (nicht gezeigte) Antenne für eine drahtlose Kommunikation mit einem (nicht gezeigten) Steuergerät aufweisen. Über die Kommunikationsschnittstelle 338 kann insbesondere eine bestimmte Verteilregel vorgegeben werden. Beispielsweise kann die mindestens eine bestimmte Verteilregel über die Kommunikationsschnittstelle 338 übertragen und/oder ausgewählt werden.

Schließlich kann der Figur 3 entnommen werden, dass die beispielhafte Mehrfachladeanschlussvorrichtung 300 einen noch weiteren, zu einem (nicht dargestellten) Haushaltsanschluss korrespondierenden Ausgangsanschluss 340 aufweist. Hierunter ist vorliegend zu verstehen, dass der noch weitere (Haus-) Ausgangsanschluss 340 derart eingerichtet sein kann, dass er mit einem (herkömmlichen) Haushaltsanschluss (beispielsweise in Form eines Steckers) mechanisch und/oder elektrisch koppelbar ist.

Insbesondere kann der noch weitere Ausgangsanschluss 340 eine Schukokupplung oder ein Schukostecker sein. Dies kann es ermöglichen, ein anderes (nicht gezeigtes) Gerät, beispielswiese ein Elektrofahrrad, (ebenfalls) über die Ladestation mittels der Mehrfachladeanschlussvorrichtung 300 zu laden. Auch hier kann vorgesehen sein, dass die Freigabeeinrichtung 316 den Stromfluss zu dem (Haus-)Ausgangsanschluss 340 nur bei Vorliegen einer Kopplungsinformation (beispielsweise bei Detektion einer Verriegelung des Haushaltsanschluss mit dem (Haus-)Ausgangsanschluss) freigibt. Das Verarbeitungsmodul 334 kann in oben beschriebener Weise eine Ladeanschlussverriegelung an der Ladestation aufheben.

Die Figur 4 zeigt eine schematische Ansicht eines Ausführungsbeispiels eines Ladesystems 450 gemäß der vorliegenden Anmeldung. Das Ladesystem 450 umfasst ein Ausführungsbeispiel einer Mehrfachladeanschlussvorrichtung 400 gemäß der vorliegenden Anmeldung. Zu Gunsten einer besseren Übersicht wurde auf die Darstellung von bestimmten Komponenten (z.B. Freigabeeinrichtung etc.) der Mehrfachladeanschlussvorrichtung 400 verzichtet. Die Mehrfachladeanschlussvorrichtung 400 kann insbesondere entsprechend einer zuvor beschriebenen Mehrfachladeanschlussvorrichtung 100, 200, 300 gebildet sein.

Das Ladesystem 450 umfasst eine Ladestation 452, die vorliegend in Form einer Wallbox 452 an einer Wand montiert ist. Es versteht sich, dass gemäß anderen Varianten der Anmeldung auch andere Arten von Ladestationen möglich sind.

Die Wallbox 452 weist einen Ladeanschluss 453 auf. Die Wallbox 452 ist im vorliegenden Ausführungsbeispiel eingerichtet, über den Ladeanschluss 453 eine Leistung von 11 kW bereitzustellen. Die Wallbox 452 umfasst ein Gehäuse, in dem eine (nicht gezeigte) Ladevorrichtung (z.B. die Ladetechnik, die mit dem Ladeanschluss 453 gekoppelt ist) integriert sein kann.

Vorliegend ist der Eingangsanschluss 406 (elektrisch und mechanisch) mit dem Ladeanschluss 453 gekoppelt. Ferner sind im dargestellten Ausführungsbeispiel vorliegend zwei Elektrofahrzeuge 464, 466 an der Mehrfachladeanschlussvorrichtung 400 angeschlossen.

So ist ein erstes Elektrofahrzeug 464 über ein Ladekabel 460 mit einem Ladestecker 456 mit einem ersten Ausgangsanschluss 410 in Form einer ersten Ladebuchse 410 gekoppelt. Ein weiteres Elektrofahrzeug 466 ist vorliegend über ein Ladekabel 462 mit einem Ladestecker 458 mit einem weiteren Ausgangsanschluss 412 in Form einer weiteren Ladebuchse 412 gekoppelt.

Darüber hinaus umfasst das Ladesystem 450 optional ein Steuergerät 468 mit einer drahtlosen Kommunikationsschnittstelle 470, die insbesondere zu der Kommunikationsschnittstelle 438 der Mehrfachladeanschlussvorrichtung 400 korrespondiert, um insbesondere eine bidirektionale Kommunikation zwischen der Mehrfachladeanschlussvorrichtung 400 und dem entfernt von der Mehrfachladeanschlussvorrichtung 400 angeordneten Steuergerät 468 zu ermöglichen.

Das Steuergerät 468 kann eingerichtet sein, einen Ladevorgang, der unter Verwendung der Mehrfachladeanschlussvorrichtung 400 durchgeführt wird, zu beeinflussen (z.B. Starten, Unterbrechen, Beenden, eine Verteilregel vorgeben, wie oben beschrieben wurde).

Das Steuergerät 468 kann vorzugsweise ein (ohnehin) vorgesehenes Hausautomatisierungssteuergerät 468 eines Hausautomatisierungssystems sein. Das Hausautomatisierungssteuergerät 468 kann beispielsweise ferner zur Steuerung einer Beleuchtung, einer Heizung etc. vorgesehen sein. Um eine Beeinflussung eines Ladevorgangs zu ermöglichen, kann das Steuergerät 468 über eine (nicht gezeigte) Nutzerschnittstelle verfügen und/oder über eine Kommunikationsverbindung mit einem Nutzerendgerät (z.B. ein Smartphone, Tablet-Computer etc.) des Nutzers verfügen. Hierdurch kann der Nutzer eine Beeinflussung des mindestens einen Ladevorgangs bewirken.

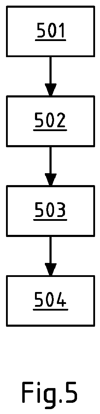

Die Figur 5 zeigt ein Diagramm eines Ausführungsbeispiels eines Verfahrens gemäß der vorliegenden Anmeldung. Das Verfahren dient insbesondere zum Betreiben einer zuvor beschriebenen Mehrfachladeanschlussvorrichtung (vgl. z.B. Fig. 1 bis 4).

Das Verfahren umfasst in einem ersten Schritt 501 ein Detektieren einer (hergestellten) Kopplung eines Ladeanschlusses eines Elektrofahrzeugs mit einem der Ausgangsanschlüsse (wie zuvor beschrieben wurde).

Insbesondere (unmittelbar) nach Detektion einer (erfolgreichen und vollständigen) Kopplung, also dem Erhalt einer Kopplungsinformation, kann in Schritt 502 ein Stromfluss zwischen dem Eingangsanschluss und einem Ausgangsanschluss, basierend auf der detektierten Kopplung, insbesondere durch eine Freigabeeinrichtung, freigegeben werden. Das Freigeben eines Stromflusses kann insbesondere das Herstellen einer elektrischen Verbindung zwischen Eingangsanschluss und Ausgangsanschluss, für den eine Kopplungsfunktion vorliegt, umfassen. Vorzugsweise kann ein zuvor beschriebenes Schaltmodul geschlossen werden, um einen Stromfluss zu ermöglichen.

Das Verfahren kann optional ferner das Detektieren einer Entkopplung eines Ladeanschlusses eines Elektrofahrzeugs mit einem der Ausgangsanschlüsse in Schritt 503 und insbesondere das Sperren des Stromflusses zwischen dem Eingangsanschluss und dem (entkoppelten) Ausgangsanschluss, basierend auf der detektierten Kopplung in Schritt 504 umfassen. Insbesondere kann in Schritt 504 unmittelbar nach dem Erhalt einer Entkopplungsinformation der Stromfluss unterbrochen werden.

## Patentansprüche

1. Mehrfachladeanschlussvorrichtung (100, 200, 300, 400) für Elektrofahrzeuge (464, 466), umfassend:
- einen, zu einem Ladeanschluss (453) einer Ladestation (452) korrespondierenden Eingangsanschluss (106, 206, 306, 406),
- einen ersten, zu einem Ladeanschluss (456, 458) eines Elektrofahrzeugs (464, 466) korrespondierenden Ausgangsanschluss (110, 210, 310, 410),
- mindestens einen weiteren, zu einem Ladeanschluss (456, 458) eines Elektrofahrzeugs (464, 466) korrespondierenden Ausgangsanschluss (112, 212, 312, 412), und
- mindestens eine Freigabeeinrichtung (116, 216, 316), eingerichtet zum Freigeben eines Stromflusses von dem Eingangsanschluss (106, 206, 306, 406) zu mindestens einem der Ausgangsanschlüsse (110, 112, 210, 212, 310, 312, 410, 412) bei Erhalt einer Kopplungsinformation über die Herstellung einer Kopplung eines Ausgangsanschlusses (110, 112, 210, 212, 310, 312, 410, 412) mit einem Ladeanschluss (456, 458) eines Elektrofahrzeugs (464, 466).

2. Mehrfachladeanschlussvorrichtung (100, 200, 300, 400) nach Anspruch 1, **dadurch gekennzeichnet, dass**
- die Freigabeeinrichtung (116, 216, 316) mindestens ein Schaltmodul (220.1, 220.2) umfasst, eingerichtet zum Herstellen einer elektrischen Verbindung zwischen dem Eingangsanschluss (106, 206, 306, 406) und dem mindestens einen Ausgangsanschluss (110, 112, 210, 212, 310, 312, 410, 412) bei Erhalt der Kopplungsinformation über die Herstellung einer Kopplung des mindestens einen Ausgangsanschlusses (110, 112, 210, 212, 310, 312, 410, 412) mit einem Ladeanschluss (456, 458) eines Elektrofahrzeugs (464, 466),
- wobei insbesondere zwischen dem Eingangsanschluss (106, 206, 306, 406) und jedem Ausgangsanschluss (110, 112, 210, 212, 310, 312, 410, 412) mindestens ein Schaltmodul (220.1, 220.2) angeordnet ist.

3. Mehrfachladeanschlussvorrichtung (100, 200, 300, 400) nach Anspruch 1 oder 2, **dadurch gekennzeichnet, dass** zum Erhalten einer Kopplungsinformation die Freigabeeinrichtung (116, 216, 316) mindestens ein Detektionsmodul (222, 322) umfasst, eingerichtet zum Detektieren eines mit einem Ladeanschluss (456, 458) eines Elektrofahrzeugs (464, 466) gekoppelten Ausgangsanschlusses (110, 112, 210, 212, 310, 312, 410, 412).

4. Mehrfachladeanschlussvorrichtung (100, 200, 300, 400) nach Anspruch 3, **dadurch gekennzeichnet, dass** das Detektionsmodul (222, 322) eingerichtet ist zum Detektieren eines ersten Ladebereitsignals, das durch ein gekoppeltes Elektrofahrzeug (464, 466) über den Ladeanschluss (456, 458) des Elektrofahrzeugs (464, 466) und den gekoppelten Ausgangsanschluss (110, 112, 210, 212, 310, 312, 410, 412) ausgesendet wird.

5. Mehrfachladeanschlussvorrichtung (100, 200, 300, 400) nach Anspruch 4, **dadurch gekennzeichnet, dass** die Freigabeeinrichtung (116, 216, 316) mindestens ein Verarbeitungsmodul (334) umfasst, eingerichtet zum Bewirken eines Aussendens eines zweiten Ladebereitsignals über den Eingangsanschluss (106, 206, 306, 406) an die angeschlossene Ladestation (452), basierend auf dem erhaltenen ersten Ladebereitsignal.

6. Mehrfachladeanschlussvorrichtung (100, 200, 300, 400) nach einem der vorherigen Ansprüche, **dadurch gekennzeichnet, dass** die Mehrfachladeanschlussvorrichtung (100, 200, 300, 400) mindestens eine Verteilungsschaltung (344) umfasst, eingerichtet zum Verteilen der über den Eingangsanschluss (106, 206, 306, 406) verfügbaren Leistung auf die mindestens zwei jeweils mit einem Ladeanschluss (456, 458) eines Elektrofahrzeugs (464, 466) gekoppelten Ausgangsanschlüsse (110, 112, 210, 212, 310, 312, 410, 412), basierend auf mindestens einer bestimmten Verteilregel.

7. Mehrfachladeanschlussvorrichtung (100, 200, 300, 400) nach Anspruch 6, **dadurch gekennzeichnet, dass**
- die bestimmte Verteilregel ausgewählt ist aus der Gruppe, umfassend:
- verfügbare Leistung wird vollständig bis zur Detektion einer Beendigung des Ladevorgangs an den Ausgangsanschluss (110, 112, 210, 212, 310, 312, 410, 412) verteilt, der als erster mit einem Ladeanschluss (456, 458) eines Elektrofahrzeugs (464, 466) gekoppelt wurde,
- verfügbare Leistung wird gleichmäßig auf die mindestens zwei Ausgangsanschlüsse (110, 112, 210, 212, 310, 312, 410, 412) verteilt,
- verfügbare Leistung wird abhängig von einer vorgegebenen Priorität der Ausgangsanschlüsse (110, 112, 210, 212, 310, 312, 410, 412) auf die mindestens zwei Ausgangsanschlüsse (110, 112, 210, 212, 310, 312, 410, 412) verteilt,
- verfügbare Leistung wird abhängig von einer erhaltenen Priorität der zu ladenden Elektrofahrzeuge (464, 466) auf die mindestens zwei Ausgangsanschlüsse (110, 112, 210, 212, 310, 312, 410, 412) verteilt, und
- verfügbare Leistung wird abhängig von einer vorgegebenen Stufenfunktion gestuft an die mindestens zwei Ausgangsanschlüsse (110, 112, 210, 212, 310, 312, 410, 412) verteilt.

8. Mehrfachladeanschlussvorrichtung (100, 200, 300, 400) nach Anspruch 6 oder 7, **dadurch gekennzeichnet, dass**
- die Mehrfachladeanschlussvorrichtung (100, 200, 300, 400) mindestens eine Schnittstelle (336, 338, 438) umfasst, eingerichtet zum Vorgeben der bestimmten Verteilregel,
- wobei die Schnittstelle (336, 338, 438) eine manuell bedienbare Nutzerschnittstelle (336) ist,
und/oder
- wobei die Schnittstelle (336, 338, 438) eine Kommunikationsschnittstelle (338, 438) ist, eingerichtet zum Kommunizieren mit einem entfernt von der Mehrfachladeanschlussvorrichtung (100, 200, 300, 400) angeordneten Steuergerät (468), insbesondere einem Hausautomatisierungssteuergerät (468) eines Hausautomatisierungssystems.

9. Verfahren zum Betreiben einer Mehrfachladeanschlussvorrichtung (100, 200, 300, 400), insbesondere einer Mehrfachladeanschlussvorrichtung (100, 200, 300, 400) nach einem der vorherigen Ansprüche, wobei die Mehrfachladeanschlussvorrichtung (100, 200, 300, 400) einen, zu einem Ladeanschluss (453) einer Ladestation (452) korrespondierenden Eingangsanschluss (106, 206, 306, 406), einen ersten, zu einem Ladeanschluss (456, 458) eines Elektrofahrzeugs (464, 466) korrespondierenden Ausgangsanschluss (110, 210, 310, 410), und mindestens einen weiteren, zu einem Ladeanschluss (456, 458) eines Elektrofahrzeugs (464, 466) korrespondierenden Ausgangsanschluss (112, 212, 312, 412) aufweist, das Verfahren umfassend:
- Detektieren einer Kopplung eines Ladeanschlusses (456, 458) eines Elektrofahrzeugs (464, 466) mit einem der Ausgangsanschlüsse (110, 112, 210, 212, 310, 312, 410, 412), und
- Freigeben eines Stromflusses zwischen dem Eingangsanschluss (106, 206, 306, 406) und einem Ausgangsanschluss (110, 112, 210, 212, 310, 312, 410, 412), basierend auf der detektierten Kopplung.

10. Ladesystem (450), umfassend:
- mindestens eine Ladestation (452) mit mindestens einem Ladeanschluss (453), und
- mindestens eine mit dem Ladeanschluss (453) verbindbare Mehrfachladeanschlussvorrichtung (100, 200, 300, 400) nach einem der vorherigen Ansprüche 1 bis 8.
